# EUROPEAN PATENT SPECIFICATION

(11) **EP 3 554 236 B1**
(45) Date of publication and mention of the grant of the patent: **25.09.2024**
(21) Application number: 17832210.3
(22) Date of filing: 11.12.2017
(51) Int. Cl.: A01N 25/30, A01N 41/06, A01N 41/10, A01N 43/90, A01N 45/02, A01N 47/36, A01P 3/00, A01P 13/00

(54) **ADJUVANTS**
ADJUVANZIEN
ADJUVANTS

(30) Priority: 15.12.2016 GB 201621396
(43) Date of publication of application: 23.10.2019
(73) Proprietor: Syngenta Crop Protection AG, 4058 Basel (CH)
(72) Inventor: RAMSAY, Julia Lynne, Bracknell Berkshire RG426EY (GB); BELL, Gordon Alastair, Bracknell Berkshire RG42 6EY (GB); TAYLOR, Philip, Bracknell Berkshire RG42 6EY (GB); STOCK, David, Bracknell Berkshire RG42 6EY (GB)
(74) Representative: SYNGENTA IP
(86) International application number: PCT/EP2017/082273
(87) International publication number: WO 2018/108835

(56) References cited:
- EP-A1- 0 943 241
- EP-A2- 0 681 865
- EP-B1- 2 825 045
- WO-A1-98/35553
- WO-A2-02/096199
- US-A- 4 280 919
- US-A- 4 936 899
- US-A1- 2005 054 538
- US-A1- 2005 272 626
- US-A1- 2010 069 509
- US-B2- 7 655 599
- ASHFORD: "Distribution of nalkanol(C12-C15) in oxo process", ASHFORD'S DICTIONARY OF INDUSTRIAL CHEMICALS THIRD ADDITION, 1 January 2011 (2011-01-01), pages 1 - 1, XP055983198, Retrieved from the Internet <URL:http://www.industrialchemistry.org/PDF/r5194.pdf> [retrieved on 20221120]

## Description

This invention relates to the use of certain alcohol alkoxylate adjuvants improve the biological performance of an agrochemical.

It is known that adjuvants may improve the biological performance of an agrochemical and that certain alcohol alkoxylates may behave as such adjuvants

US 2010/069509 A, US 2005/272626 A1, EP 0 681 865 A2, US 7 655 599 B2, EP 2 825 045 B1, WO 02/096199 A2 disclose use of adjuvants of formula

alkyl-O-(PO)ₘ-(EO)ₙ-H in agrochemical formulations.

The present invention relates to a use of a class of alcohol alkoxylates which behave surprisingly better than other known adjuvants.

The adjuvants used in the present invention have the structure R-O-[R₁O]ₘ-[R₂O]ₙ-H where R is a C₁₆ to C₁₈ (C₁₆₋₁₈; that is from C₁₆ to C₁₈) straight or branched chain alkyl or alkenyl group, Ri is isopropyl, R₂ is ethyl, m is from 4 to 9 and n is from 4 to 15. This means that each RiO represents a propylene oxide [PO] unit and each R₂O represents an ethylene oxide [EO] unit.

Suitably the carbon chain of R is such that it is a blend of C₁₆ and C₁₈.

In one aspect R is preferably C₁₆ to C₁₈ straight chain alkyl; more preferably it is a blend of C₁₆ and C₁₈.

In another aspect R is preferably oleyl.
m is preferably from 4 to 6.
n is preferably from 4 to 12.
m is the mean number of PO units.
n is the mean number of EO units.

The noun "agrochemical" and term "agrochemically active ingredient" are used herein interchangeably, and include herbicides, insecticides, nematicides, molluscicides, fungicides, plant growth regulators and safeners; preferably herbicides, insecticides and fungicides; and more preferably fungicides and herbicides.

An agrochemical, or a salt of the agrochemical, selected from those given below is suitable for the present invention.

Suitable herbicides include pinoxaden, bicyclopyrone, mesotrione, fomesafen, tralkoxydim, napropamide, amitraz, propanil, pyrimethanil, dicloran, tecnazene, toclofos methyl, flamprop M, 2,4-D, MCPA, mecoprop, clodinafop-propargyl, cyhalofop-butyl, diclofop methyl, haloxyfop, quizalofop-P, indol-3-ylacetic acid, 1-naphthylacetic acid, isoxaben, tebutam, chlorthal dimethyl, benomyl, benfuresate, dicamba, dichlobenil, benazolin, triazoxide, fluazuron, teflubenzuron, phenmedipham, acetochlor, alachlor, metolachlor, pretilachlor, thenylchlor, alloxydim, butroxydim, clethodim, cyclodim, sethoxydim, tepraloxydim, pendimethalin, dinoterb, bifenox, oxyfluorfen, acifluorfen, fluazifop, S-metolachlor, glyphosate, glufosinate, paraquat, diquat, fluoroglycofen-ethyl, bromoxynil, ioxynil, imazamethabenz-methyl, imazapyr, imazaquin, imazethapyr, imazapic, imazamox, flumioxazin, flumiclorac-pentyl, picloram, amodosulfuron, chlorsulfuron, nicosulfuron, rimsulfuron, triasulfuron, triallate, pebulate, prosulfocarb, molinate, atrazine, simazine, cyanazine, ametryn, prometryn, terbuthylazine, terbutryn, sulcotrione, isoproturon, linuron, fenuron, chlorotoluron, metoxuron, iodosulfuron, mesosulfuron, diflufenican, flufenacet, fluroxypyr, aminopyralid, pyroxsulam, XDE-848 Rinskor and halauxifen-methyl.

Suitable fungicides include isopyrazam, mandipropamid, azoxystrobin, trifloxystrobin, kresoxim methyl, mefenoxam, famoxadone, metominostrobin, picoxystrobin, cyprodanil, carbendazim, thiabendazole, dimethomorph, vinclozolin, iprodione, dithiocarbamate, imazalil, prochloraz, fluquinconazole, epoxiconazole, flutriafol, azaconazole, bitertanol, bromuconazole, cyproconazole, difenoconazole, hexaconazole, paclobutrazole, propiconazole, tebuconazole, triadimefon, trtiticonazole, fenpropimorph, tridemorph, fenpropidin, mancozeb, metiram, chlorothalonil, thiram, ziram, captafol, captan, folpet, fluazinam, flutolanil, carboxin, metalaxyl, bupirimate, ethirimol, dimoxystrobin, fluoxastrobin, orysastrobin, metominostrobin, prothioconazole, adepidyn, bixafen, fluxapyroxad, prothioconazole, pyraclostrobin, revysol, solatenol and xemium.

Suitable insecticides include thiamethoxam, imidacloprid, acetamiprid, clothianidin, dinotefuran, nitenpyram, fipronil, abamectin, emamectin, tefluthrin, emamectin benzoate, bendiocarb, carbaryl, fenoxycarb, isoprocarb, pirimicarb, propoxur, xylylcarb, asulam, chlorpropham, endosulfan, heptachlor, tebufenozide, bensultap, diethofencarb, pirimiphos methyl, aldicarb, methomyl, cyprmethrin, bioallethrin, deltamethrin, lambda cyhalothrin, cyhalothrin, cyfluthrin, fenvalerate, imiprothrin, permethrin, halfenprox, oxamyl, flupyradifurone, sedaxane, inscalis, rynaxypyr, cyantraniliprole, sulfoxaflor and spinetoram.

Suitable plant growth regulators include paclobutrazole, trinexapac-ethyl and 1-methylcyclopropene.

Suitable safeners include benoxacor, cloquintocet-mexyl, cyometrinil, dichlormid, fenchlorazole-ethyl, fenclorim, flurazole, fluxofenim, mefenpyr-diethyl, MG-191, naphthalic anhydride and oxabetrinil.

Suitably, the agrochemical is selected from bicyclopyrone, mesotrione, pinoxaden, fomesafen,tralkoxydim, napropamide, amitraz, propanil, pyrimethanil, dicloran, tecnazene, toclofos methyl, flamprop M, 2,4-D, MCPA, mecoprop, clodinafop-propargyl, cyhalofop-butyl, diclofop methyl, haloxyfop, quizalofop-P, indol-3-ylacetic acid, 1-naphthylacetic acid, isoxaben, tebutam, chlorthal dimethyl, benomyl, benfuresate, dicamba, dichlobenil, benazolin, triazoxide, fluazuron, teflubenzuron, phenmedipham, acetochlor, alachlor, metolachlor, pretilachlor, thenylchlor, alloxydim, butroxydim, clethodim, cyclodim, sethoxydim, tepraloxydim, pendimethalin, dinoterb, bifenox, oxyfluorfen, acifluorfen, fluoroglycofen-ethyl, bromoxynil, ioxynil, imazamethabenz-methyl, imazapyr, imazaquin, imazethapyr, imazapic, imazamox, flumioxazin, flumiclorac-pentyl, picloram, amodosulfuron, chlorsulfuron, nicosulfuron, rimsulfuron, triasulfuron, triallate, pebulate, prosulfocarb, molinate, atrazine, simazine, cyanazine, ametryn, prometryn, terbuthylazine, terbutryn, sulcotrione, isoproturon, linuron, fenuron, chlorotoluron, metoxuron, isopyrazam, mandipropamid, azoxystrobin, trifloxystrobin, kresoxim methyl, famoxadone, metominostrobin and picoxystrobin, cyprodanil, carbendazim, thiabendazole, dimethomorph, vinclozolin, iprodione, dithiocarbamate, imazalil, prochloraz, fluquinconazole, epoxiconazole, flutriafol, azaconazole, bitertanol, bromuconazole, cyproconazole, difenoconazole, hexaconazole, paclobutrazole, propiconazole, tebuconazole, triadimefon, trtiticonazole, fenpropimorph, tridemorph, fenpropidin, mancozeb, metiram, chlorothalonil, thiram, ziram, captafol, captan, folpet, fluazinam, flutolanil, carboxin, metalaxyl, bupirimate, ethirimol, dimoxystrobin, fluoxastrobin, orysastrobin, metominostrobin, prothioconazole, thiamethoxam, imidacloprid, acetamiprid, clothianidin, dinotefuran, nitenpyram, fipronil, abamectin, emamectin, bendiocarb, carbaryl, fenoxycarb, isoprocarb, pirimicarb, propoxur, xylylcarb, asulam, chlorpropham, endosulfan, heptachlor, tebufenozide, bensultap, diethofencarb, pirimiphos methyl, aldicarb, methomyl, cyprmethrin, bioallethrin, deltamethrin, lambda cyhalothrin, cyhalothrin, cyfluthrin, fenvalerate, imiprothrin, permethrin, halfenprox, paclobutrazole, 1-methylcyclopropene, benoxacor, cloquintocet-mexyl, cyometrinil, dichlormid, fenchlorazole-ethyl, fenclorim, flurazole, fluxofenim, mefenpyr-diethyl, MG-191, naphthalic anhydride and oxabetrinil.

Preferred agrochemical active ingredients are selected from fomesafen (suitably as the sodium salt), mesotrione, nicosulfuron, pinoxaden, isopyrazam, epoxiconazole, solatenol and cyantraniliprole.

More preferably, the agrochemical is fomesafen (suitably as the sodium salt), mesotrione, nicosulfuron or pinoxaden.

The various editions of The Pesticide Manual [especially the 14th and 15th editions] also disclose details of agrochemicals, any one of which may suitably be used in the present invention.

The adjutants of formula (I) are used in an agrochemical composition.

The compositions per se are not part of the invention.

Generally any agrochemically active ingredient will be present at a concentration of from about 0.000001% to about 90% w/w; preferably from about 0.001% to about 90% w/w. Agrochemical compositions may be in the form of a ready-to-use formulation or in concentrate form suitable for further dilution by the end user, and the concentration of agrochemical and compound of formula (I) will be adjusted accordingly. In concentrated form, compositions typically contain an agrochemical at from 5 to 90% w/w, more preferably from 5 to 75% w/w, even more preferably from 10 to 50% w/w, of the total composition. Ready-to-use compositions will typically contain an agrochemical at from 0.000001% to 1% w/w, more preferably from 0.000001% to 0.5% w/w, and more preferably still from 0.001% to 0.1% w/w, of the total composition.

Typically a compound of formula (I) will have a concentration of from about 0.0005% to about 90% w/w of the total composition; preferably from about 0.01% to about 90% w/w. When in concentrated form, compositions typically contain a compound of formula (I) at from 1% to 80% w/w, preferably from 5% to 60% w/w, more preferably from 5% w/w to 40% w/w and even more preferably from 5% w/w to 20% w/w of the total composition. Ready to use compositions typically contain a compound of formula (I) at from about 0.0005% to about 2% w/w of the total composition, more preferably from about 0.01% to about 1% w/w and even more preferably from 0.05% w/w to 0.5% w/w of the total composition. If the specific individual compound of formula (I) is present with a blend of other compounds of formula (I) due to a variety of values of m and n, then these concentration ranges for the individual compound may be varied such that the lower limit is reduced by a factor of 10 and the upper limit is reduced by a factor of 2.

The compositions may relate to concentrates designed to be added to a farmer's spray tank of water or they may be applied directly without further dilution.

Preferably compositions are be selected from an SC (suspension concentrate); an SL (soluble liquid); an EC (emulsifiable concentrate); a DC (dispersible concentrate); a WG (water dispersible granule); a SG (soluble granule); an EW (emulsion in water); a SE (suspension-emulsion); a CS (capsule suspension); and an OD (oil dispersion).

Furthermore, an adjuvant system as herein described may be designed to be added to a formulation of an agrochemical (for example by mixing with water in a farmer's spray tank).

The compositions may include other ingredients such as a dispersing agent, a surfactant, an emulsifier, a solvent, a polymer, an anti-foam agent, an anti-bacterial agent, a colourant and a perfume, which are well known to the man skilled in the art. Standard formulation publications disclose such formulation components suitable for use with the present invention (for example, Chemistry and Technology of Agrochemical Formulations, Ed. Alan Knowles, published by Kluwer Academic Publishers, The Netherlands in 1998; and Adjuvants and Additives: 2006 Edition by Alan Knowles, Agrow Report DS256, published by Informa UK Ltd, December 2006). The compositions may also comprise other ingredients for improving formulation compatibility; such as hydrotropes and viscosity reducing aids, as discussed in WO12052545, which may be suitable for use with the alcohol alkoxylate adjuvants of the present invention.

The compositions may include other adjuvants. Suitable adjuvants are known to those skilled in the art, examples are given in Hazen, Weed Technology, 2000, 14, 773-784 "Adjuvants - terminology, classification and chemistry". Examples are surfactants (e.g. non-ionic, anionic, cationic or amphoteric), wetting agents, spreading agents, sticking agents, humectants and penetration agents. Further examples of suitable adjuvants are mineral oils, vegetable oils, fatty acid esters, esters of aliphatic or aromatic dicarboxylic acids, alcohol ethoxylates, alkylphenol ethoxylates, alkylamine ethoxylates, ethoxylates of triglycerides, ethoxylates of fatty acids, ethoxylates of fatty acid esters, ethoxylates of sorbitan fatty acid esters, alkyl polyglycosides and silicone based adjuvants. Preferred suitable adjuvants are surfactants which provide improved wetting or improved spray retention properties.

The following examples demonstrate the effect on biological performance of adjuvants used in accordance with the present invention; the adjuvants used are tabulated in Table A, along with comparative adjuvants. Further comparative adjuvants used were the commercial adjuvants ATPLUS^{®} 411 F (a mineral oil adjuvant); Turbocharge^{®} (an oil-adjuvant blend); Tween^{®} 20 (a polyoxyethylene sorbitan laurate ester adjuvant) and the adjuvant tris(2-ethylhexyl) phosphate [TEHP].

**Table A**

| | Adjuvant structure |
|---|---|
| Adjuvant 1 | C16-C18 alkyl 6PO + 4EO |
| Adjuvant 2 | Oleyl 4PO + 10EO |
| Adjuvant 3 (comparative) | C12-C15 alkyl 4EO + 4PO |
| Adjuvant 4 (comparative) | C12-C15 alkyl 8EO + 4PO |
| Adjuvant 5 | C16-C18 alkyl 4PO + 9EO |
| Adjuvant 6 (comparative) | 2-ethylhexyl alkoxylate containing 5PO units and 6EO units. |

In one aspect of the present invention Adjuvant 1 is preferred; in an alternative aspect, Adjuvant 2 is preferred; in another alternative aspect Adjuvant 5 is preferred.

### Example 1

The efficacy of Adjuvant 1 as an adjuvant for the herbicide nicosulfuron was tested in a glasshouse against four weed species. Nicosulfuron was added to the spray tank as a standard WG (water dispersible granule) formulation.

The plants were sprayed with nicosulfuron (in the absence of an adjuvant) at rates of 30 and 60 grams of pesticide per hectare using a laboratory track sprayer which delivered the aqueous spray composition at a rate of 200 litres per hectare. The spray tests were also carried out using nicosulfuron in conjunction with Adjuvant 1, Adjuvant 3, Adjuvant 4 or the commercially available tank-mix adjuvant, Atplus 411F^{®}. The adjuvants were added to the spray solution at a rate of 0.2% v/v, except Atplus 411F^{®} which was added at a rate of 0.5% v/v. The weed species and their growth stage at spraying were *Abutilon theophrasti* (ABUTH; growth stage 13), *Chenopodium album* (CHEAL; growth stage 13-14), *Digitaria sanguinalis* (DIGSA; growth stage 13-21), and *Setaria viridis* (SETVI; growth stage 14-21).

Each spray test was replicated three times. The efficacy of the herbicide was assessed visually and expressed as a percentage of the leaf area killed. Samples were assessed at a time period of 21 days following application. The results shown in Table 1 below are mean averages over the two rates of nicosulfuron, the three replicates and the four weed species.

**Table 1**

| **Mean percentage kill results for nicosulfuron with different adjuvants** | |
|---|---|
| **Treatment** | **Mean across species % phytotoxicity** |
| Nicosulfuron | 34.4 |
| Nicosulfuron + ATPLUS^{®} 411 F | 67.5 |
| Nicosulfuron + Adjuvant 1 | 77.3 |
| Nicosulfuron + Adjuvant 3 | 64.6 |
| Nicosulfuron + Adjuvant 4 | 72.3 |

The results show that Adjuvant 1 is an effective adjuvant for nicosulfuron and is at least as efficacious as the commercially available tank-mix adjuvant Atplus 411F^{®}. Adjuvant 1 shows better efficacy for nicosulfuron than the comparative alkoxylated adjuvants Adjuvant 3 and Adjuvant 4.

### Example 2

The efficacy of Adjuvant 1 as an adjuvant for the herbicide mesotrione was tested in a glasshouse against four weed species. Mesotrione was added to the spray tank as a standard SC (suspension concentrate) formulation.

The plants were sprayed with mesotrione (in the absence of an adjuvant) at rates of 30 and 60 grams of pesticide per hectare using a laboratory track sprayer which delivered the aqueous spray composition at a rate of 200 litres per hectare. The spray tests were also carried out using mesotrione in conjunction with Adjuvant 1, Adjuvant 3, Adjuvant 4 or the well-known adjuvant Tween^{®} 20. The adjuvants were added to the spray solution at a rate of 0.2% v/v, except Tween^{®} 20 which was added at a rate of 0.5% v/v. The four weed species were *Polygonum convolvulus* (POLCO; growth stage 13-15), *Brachiaria plantaginea* (BRAPL; growth stage 13-21), *Commelina benghalensis* (COMBE; growth stage 12-13) and *Digitaria sanguinalis* (DIGSA; growth stage 13-14).

Each spray test was replicated three times. The efficacy of the herbicide was assessed visually and expressed as a percentage of the leaf area killed. Samples were assessed at a time period of 21 days following application. The results shown in Table 2 below are mean averages over the two rates of mesotrione, the three replicates and the four weed species.

**Table 2**

| **Mean percentage kill results for mesotrione with different adjuvants** | |
|---|---|
| **Treatment** | **Mean across species % phytotoxicity** |
| Mesotrione | 25.6 |
| Mesotrione + Adjuvant 1 | 64.6 |
| Mesotrione + Adjuvant 3 | 56.3 |
| Mesotrione + Adjuvant 4 | 44.6 |
| Mesotrione + Tween^{®} 20 | 67.3 |

The results show that Adjuvant 1 is an effective adjuvant for mesotrione, and is almost as efficacious as the known adjuvant Tween^{®}20. Adjuvant 1 shows better efficacy for mesotrione than the comparative alkoxylated adjuvants Adjuvant 3 and Adjuvant 4.

### Example 3

The efficacy of Adjuvant 1 as an adjuvant for the herbicide pinoxaden was tested in a glasshouse against four weed species. Pinoxaden was added to the spray tank as a standard EC (emulsifiable concentrate) formulation.

The plants were sprayed with pinoxaden (in the absence of an adjuvant) at rates of 7.5 and 15 grams of pesticide per hectare using a laboratory track sprayer which delivered the aqueous spray composition at a rate of 200 litres per hectare. The spray tests were also carried out using pinoxaden in conjunction with Adjuvant 1, Adjuvant 3, Adjuvant 4 or the standard adjuvant tris(2-ethylhexyl) phosphate. The adjuvants were added to the spray solution at a rate of 0.2% v/v. The weed species and their growth stage at spraying were *Alopecurus myosuroides* (ALOMY; growth stage 12-13), *Avena fatua* (AVEFA; growth stage 12-13); *Lolium perenne* (LOLPE; growth stage 13) and *Setaria viridis* (SETVI; growth stage 12-13). Each spray test was replicated three times. The efficacy of the herbicide was assessed visually and expressed as a percentage of the leaf area killed. Samples were assessed at a time period of 21 days following application. The results shown in Table 3 below are mean averages over the two rates of pinoxaden, the three replicates and the four weed species.

The results show that Adjuvant 1 is an effective adjuvant for pinoxaden and is almost as efficacious as the standard adjuvant tris(2-ethylhexyl)phosphate, which is a very effective adjuvant for pinoxaden. Adjuvant 1 shows better efficacy for pinoxaden than the comparative alkoxylated adjuvants Adjuvant 3 and Adjuvant 4.

**Table 3**

| **Mean percentage kill results for pinoxaden with different adjuvants** | |
|---|---|
| **Treatment** | **Mean across species % phytotoxicity** |
| Pinoxaden | 3.6 |
| Pinoxaden + Adjuvant 1 | 76.7 |
| Pinoxaden + Adjuvant 3 | 66.6 |
| Pinoxaden + Adjuvant 4 | 55.1 |
| Pinoxaden + tris(2-ethylhexyl) phosphate | 79.8 |

### Example 4

The efficacy of Adjuvant 1 as an adjuvant for the herbicide fomesafen (as the sodium salt) was tested in a glasshouse against four weed species. Fomesafen sodium salt was added to the spray tank as a standard SL (soluble concentrate) formulation.

The plants were sprayed with fomesafen (in the absence of an adjuvant) at rates of 60 and 120 grams of pesticide per hectare using a laboratory track sprayer which delivered the aqueous spray composition at a rate of 200 litres per hectare. The spray tests were also carried out using fomesafen in conjunction with Adjuvant 1, Adjuvant 3, Adjuvant 4 or the commercially available adjuvant Turbocharge^{®}. The adjuvants were added to the spray solution at a rate of 0.2% v/v, except Turbocharge^{®} which was added at a rate of or 0.5% v/v. The weed species and their growth stage at spraying were *Chenopodium album* (CHEAL;growth stage 13-15 ), *Abutilon theophrasti* (ABUTH; growth stage 12-14), *Setaria viridis* (SETVI; growth stage 13-21) and *Commelina benghalensis* (growth stage 12-13).

Each spray test was replicated three times. The efficacy of the herbicide was assessed visually and expressed as a percentage of the leaf area killed. Samples were assessed at a time period of 21 days following application. The results shown in Table 4 below are mean averages over the two rates of fomesafen, the three replicates and the four weed species.

**Table 4**

| **Mean percentage kill results for fomesafen with different adjuvants** | |
|---|---|
| **Treatment** | **Mean across species % phytotoxicity** |
| Fomesafen | 21.5 |
| Fomesafen + Adjuvant 1 | 50.0 |
| Fomesafen + Adjuvant 3 | 43.4 |
| Fomesafen + Adjuvant 4 | 42.1 |
| Fomesafen + Turbocharge^{®} | 48.8 |

The results demonstrate that Adjuvant 1 is an effective adjuvant for fomesafen and is at least as effective as the commercially available agrochemical adjuvant Turbocharge^{®}. Adjuvant 1 shows better efficacy for fomesafen than the comparative alkoxylated adjuvants Adjuvant 3, and Adjuvant 4.

### Example 5

The efficacy of Adjuvant 2 as an adjuvant for the herbicide nicosulfuron was tested in a glasshouse against four weed species. Nicosulfuron was added to the spray tank as a standard WG (water dispersible granule) formulation.

The plants were sprayed with nicosulfuron (in the absence of an adjuvant) at rates of 30 and 60 grams of pesticide per hectare using a laboratory track sprayer which delivered the aqueous spray composition at a rate of 200 litres per hectare. The spray tests were also carried out using nicosulfuron in conjunction with Adjuvant 2 or the commercially available tank-mix adjuvant, Atplus 411F^{®}. These adjuvants were added to the spray solution at a rate of 0.2% v/v or 0.5% v/v respectively. The weed species were *Abutilon theophrasti* (ABUTH), *Chenopodium album* (CHEAL), *Digitaria sanguinalis* (DIGSA) and *Setaria viridis* (SETVI).

Each spray test was replicated three times. The efficacy of the herbicide was assessed visually and expressed as a percentage of the leaf area killed. Samples were assessed at a time period of 21 days following application. The results shown in Table 5 below are mean averages over the two rates of nicosulfuron, the three replicates and the four weed species.

**Table 5**

| **Mean percentage kill results for nicosulfuron with different adjuvants** | |
|---|---|
| **Treatment** | **Mean across species % phytotoxicity** |
| Nicosulfuron | 64.5 |
| Nicosulfuron + ATPLUS^{®} 411 F | 81.5 |
| Nicosulfuron + Adjuvant 2 | 81.9 |

The results show that Adjuvant 2 is an effective adjuvant for nicosulfuron and is at least as efficacious as the commercially available tank-mix adjuvant Atplus 411F^{®}.

### Example 6

The efficacy of Adjuvant 2 as an adjuvant for the herbicide mesotrione was tested in a glasshouse against four weed species. Mesotrione was added to the spray tank as a standard SC (suspension concentrate) formulation.

The plants were sprayed with mesotrione (in the absence of an adjuvant) at rates of 30 and 60 grams of pesticide per hectare using a laboratory track sprayer which delivered the aqueous spray composition at a rate of 200 litres per hectare. The spray tests were also carried out using mesotrione in conjunction with Adjuvant 2 or the well-known adjuvant Tween^{®} 20. These adjuvants were added to the spray solution at a rate of 0.2% v/v or 0.5% v/v respectively. The four weed species were *Polygonum convolvulus* (POLCO), *Brachiaria plantaginea* (BRAPL), *Commelina benghalensis* (COMBE) and *Digitaria sanguinalis* (DIGSA). Each spray test was replicated three times. The efficacy of the herbicide was assessed visually and expressed as a percentage of the leaf area killed. Samples were assessed at a time period of 21 days following application. The results shown in Table 6 below are mean averages over the two rates of mesotrione, the three replicates and the four weed species.

**Table 6**

| **Mean percentage kill results for mesotrione with different adjuvants** | |
|---|---|
| **Treatment** | **Mean across species % phytotoxicity** |
| Mesotrione | 17.8 |
| Mesotrione + Adjuvant 2 | 62.5 |
| Mesotrione + Tween^{®} 20 | 57.5 |

The results show that Adjuvant 2 is an effective adjuvant for mesotrione, and is at least as efficacious as the well-known adjuvant Tween^{®}20.

### Example 7

The efficacy of Adjuvant 2 as an adjuvant for the herbicide pinoxaden was tested in a glasshouse against four weed species. Pinoxaden was added to the spray tank as a standard EC (emulsifiable concentrate) formulation.

The plants were sprayed with pinoxaden (in the absence of an adjuvant) at rates of 7.5 and 15 grams of pesticide per hectare using a laboratory track sprayer which delivered the aqueous spray composition at a rate of 200 litres per hectare. The spray tests were also carried out using pinoxaden in conjunction with Adjuvant 2 or the standard adjuvant tris(2-ethylhexyl) phosphate. These adjuvants were added to the spray solution at a rate of 0.2% v/v. The weed species were *Alopecurus myosuroides* (ALOMY), *Avena fatua* (AVEFA); *Lolium perenne* (LOLPE) and *Setaria viridis* (SETVI).

Each spray test was replicated three times. The efficacy of the herbicide was assessed visually and expressed as a percentage of the leaf area killed. Samples were assessed at a time period of 21 days following application. The results shown in Table 7 below are mean averages over the two rates of pinoxaden, the three replicates and the four weed species.

The results show that Adjuvant 2 is an effective adjuvant for pinoxaden, and is almost as efficacious as the standard adjuvant tris(2-ethylhexyl)phosphate which is a very effective adjuvant for pinoxaden.

**Table 7**

| **Mean percentage kill results for pinoxaden with different adjuvants** | |
|---|---|
| **Treatment** | **Mean across species % phytotoxicity** |
| Pinoxaden | 3.4 |
| Pinoxaden + Adjuvant 2 | 68.1 |
| Pinoxaden + tris(2-ethylhexyl) phosphate | 68.6 |

### Example 8

The efficacy of Adjuvant 2 as an adjuvant for the herbicide fomesafen (as the sodium salt) was tested in a glasshouse against four weed species. Fomesafen sodium salt was added to the spray tank as a standard SL (soluble concentrate) formulation.

The plants were sprayed with fomesafen (in the absence of an adjuvant) at rates of 60 and 120 grams of pesticide per hectare using a laboratory track sprayer which delivered the aqueous spray composition at a rate of 200 litres per hectare. The spray tests were also carried out using fomesafen in conjunction with Adjuvant 2 or the commercially available agrochemical adjuvant Turbocharge^{®}. These adjuvants were added to the spray solution at a rate of 0.2% v/v or 0.5% v/v respectively. The weed species were *Chenopodium album* (CHEAL), *Abutilon theophrasti* (ABUTH), *Setaria viridis* (SETVI) and *Xanthium strumarium (XANST).*

Each spray test was replicated three times. The efficacy of the herbicide was assessed visually and expressed as a percentage of the leaf area killed. Samples were assessed at a time period of 21 days following application. The results shown in Table 8 below are mean averages over the two rates of fomesafen, the three replicates and the four weed species.

**Table 8**

| **Mean percentage kill results for fomesafen with different adjuvants** | |
|---|---|
| **Treatment** | **Mean across species % phytotoxicity** |
| Fomesafen | 34.8 |
| Fomesafen + Adjuvant 2 | 58.8 |
| Fomesafen + Turbocharge^{®} | 59.3 |

The results demonstrate that Adjuvant 2 is an effective adjuvant for fomesafen and is almost as efficacious as the commercially available agrochemical adjuvant Turbocharge^{®}.

### Example 9

The efficacy of Adjuvant 5 as an adjuvant for the herbicide mesotrione was tested in a glasshouse against four weed species. Mesotrione was added to the spray tank as a standard SC (suspension concentrate) formulation.

The plants were sprayed with mesotrione (in the absence of an adjuvant) at rates of 30 or 60 grams of pesticide per hectare using a laboratory track sprayer which delivered the aqueous spray composition at a rate of 200 litres per hectare. The spray tests were also carried out using mesotrione in conjunction with Adjuvant 5, Adjuvant 6 or the well-known adjuvant Tween^{®} 20. The adjuvants were added to the spray solution at a rate of 0.2% v/v, except Tween^{®} 20 which was added at a rate of 0.5% v/v. The four weed species were *Polygonum convolvulus* (POLCO), *Brachiaria plantaginea* (BRAPL), *Commelina benghalensis* (COMBE) and *Digitaria sanguinalis* (DIGSA).

Each spray test was replicated three times. The efficacy of the herbicide was assessed visually and expressed as a percentage of the leaf area killed. Samples were assessed at a time period of 21 days following application. The results shown in Table 9 below are mean averages over the two rates of mesotrione, the three replicates and the four weed species.

**Table 9**

| **Mean percentage kill results for mesotrione with different adjuvants** | |
|---|---|
| **Treatment** | **Mean across species % phytotoxicity** |
| Mesotrione | 27.5 |
| Mesotrione + Adjuvant 5 | 63.6 |
| Mesotrione + Adjuvant 6 | 49.3 |
| Mesotrione + Tween^{®} 20 | 54.6 |

The results show that Adjuvant 5 is an effective adjuvant for mesotrione, and is more efficacious than the known adjuvant Tween^{®}20. Adjuvant 5 also shows better efficacy for mesotrione than the comparative Adjuvant 6.

### Example 10

The efficacy of Adjuvant 5 as an adjuvant for the herbicide pinoxaden was tested in a glasshouse against four weed species. Pinoxaden was added to the spray tank as a standard EC (emulsifiable concentrate) formulation.

The plants were sprayed with pinoxaden (in the absence of an adjuvant) at rates of 7.5 or 15 grams of pesticide per hectare using a laboratory track sprayer which delivered the aqueous spray composition at a rate of 200 litres per hectare. The spray tests were also carried out using pinoxaden in conjunction with Adjuvant 5, Adjuvant 6 or the standard adjuvant tris(2-ethylhexyl) phosphate. The adjuvants were added to the spray solution at a rate of 0.2% v/v. The weed species were *Alopecurus myosuroides* (ALOMY), *Avena fatua* (AVEFA), *Lolium perenne* (LOLPE) and *Setaria viridis* (SETVI). Each spray test was replicated three times. The efficacy of the herbicide was assessed visually and expressed as a percentage of the leaf area killed. Samples were assessed at a time period of 21 days following application. The results shown in Table 10 below are mean averages over the two rates of pinoxaden, the three replicates and the four weed species.

The results show that Adjuvant 5 is an effective adjuvant for pinoxaden and is almost as efficacious as the standard adjuvant tris(2-ethylhexyl)phosphate, which is a very effective adjuvant for pinoxaden. Adjuvant 5 shows better efficacy for pinoxaden than the comparative Adjuvant 6.

**Table 10**

| **Mean percentage kill results for pinoxaden with different adjuvants** | |
|---|---|
| **Treatment** | **Mean across species % phytotoxicity** |
| Pinoxaden | 7.5 |
| Pinoxaden + Adjuvant 5 | 86.4 |
| Pinoxaden + Adjuvant 6 | 70.9 |
| Pinoxaden + tris(2-ethylhexyl) phosphate | 90.2 |

### Example 11

Adjuvant 1 was tested as an adjuvant for agrochemical compositions comprising isopyrazam.

Two week old wheat plants were inoculated with the fungus *Septoria tritici.* Four days after inoculation, the plants were sprayed with a diluted suspension concentrate formulation of the fungicide isopyrazam (in the absence of an adjuvant) at rates of 6.5, 16, 40 or 100 mg of the fungicide per litre of spray solution, using a laboratory track sprayer which delivered the aqueous spray composition at a rate of 200 litres per hectare, using a flat fan nozzle (LU 90-01) at 2 bar. Spray tests were also carried out with diluted isopyrazam suspension concentrate additionally comprising Adjuvant 1, which was added to the spray solution at a rate of 0.1% v/v, based on the quantity of spray liquor. The leaves of the plants were assessed visually 14 days after infection and the damage was expressed as the percentage of the leaf area infected. Each spray test was replicated four times across the four application rates.

The results shown in Table 11 below are mean averages over the four rates of isopyrazam and the four replicates.

**Table 11**

| **Mean % infection of wheat plants with *S. tritici* treated with isopyrazam** | |
|---|---|
| **Treatment** | **Mean % infection** |
| Isopyrazam SC | 77.5 |
| Isopyrazam SC + Adjuvant 1 | 17.0 |

As can be seen from Table 11 the inclusion of Adjuvant 1 as an adjuvant for isopyrazam resulted in a significant reduction in the percentage of infection by *S. tritici* in comparison to that achieved by the isopyrazam SC with no adjuvant.

## Claims

1. Use of a compound of formula (I) to improve the biological performance of an agrochemical
R-O-[PO]ₘ-[EO]ₙ-H (I)
where R is a C₁₆ to C₁₈ straight or branched chain alkyl or alkenyl group, PO means a propylene oxide unit, EO means an ethylene oxide unit, m is from 4 to 9 and n is from 4 to 15.

## Patentansprüche

1. Verwendung einer Verbindung der Formel (I) zur Verbesserung der biologischen Leistung einer Agrochemikalie
R-O-[PO]ₘ-[EO]ₙ-H (I)
wobei R für eine gerad- oder verzweigtkettige C₁₆- bis C₁₈-Alkyl- oder -Alkenylgruppe steht, PO eine Propylenoxid-Einheit bedeutet, EO eine Ethylenoxid-Einheit bedeutet, m für 4 bis 9 steht und n für 4 bis 15 steht.

## Revendications

1. Utilisation d'un composé de formule (I) pour améliorer la performance biologique d'un agent agrochimique
R-O-[PO]ₘ-[EO]ₙ-H (I)
où R est un groupe alkyle ou alcényle linéaire ou ramifié en C₁₆ à C₁₈, PO signifie un motif d'oxyde de propylène, EO signifie un motif d'oxyde d'éthylène, m est de 4 à 9 et n est de 4 à 15.
